# EUROPEAN PATENT SPECIFICATION

(11) **EP 1 786 171 B1**
(45) Date of publication and mention of the grant of the patent: **05.09.2018**
(21) Application number: 07004315.3
(22) Date of filing: 18.07.2001
(51) Int. Cl.: H04L 29/06, G06F 17/30

(54) **Improvements in and relating to content delivery**
Verbesserungen der Inhaltsauslieferung
Améliorations concernant l'acheminement de contenus

(30) Priority: 30.04.2001 US 287015
(43) Date of publication of application: 16.05.2007
(62) Divisional of application: 01957981.2
(73) Proprietor: Nokia Technologies Oy, 02610 Espoo (FI)
(72) Inventor: Duran, Julian, San Diego, CA 92109 (US); Arnberg, Tommy, 00430 Helsinki (FI)
(74) Representative: Swindell & Pearson Limited

(56) References cited:
- EP-A- 0 853 287
- EP-A- 1 077 437
- WO-A-99/51038
- WO-A-99/55102
- US-B1- 6 332 127

## Description

The present invention relates to the delivery of content, particularly, although not exclusively, to mobile terminals.

Traditionally, the distribution of content, whether it is audio, video, textual or similar matter has been controlled by the right holder. Thus, a right holder has been able to release content in a format and at a time of their choice. In addition, the right holder has been able to license the distribution of content through collecting societies and the like particularly in relation to public performance of content such as audio and visual works. A licence to permit such performances is typically made available through a collection society or body which collectively negotiates licence terms on behalf of its members, the right holders. Such licences may restrict the time, location and other conditions under which the content is made available.

In addition to the market conditions which may influence the release of content, the right holder may also have to comply with local legislation dictating the availability of content to users. For example, content may be made available to a user only above a certain age.

More recently, right holders have had to adapt to new forms of distribution such as digital media in the form of compact discs (CDs), digital versatile discs (DVDs) as well the possibility of distribution over networks such as the Internet. Some efforts have been made to maintain the ability of the right holder to control the distribution of content and include the concept of regional coding applied to DVDs, for example. As a result of such coding, a DVD may be rendered by a compliant player only, that is a player having a corresponding regional code.

WO 99/55102 discloses a system for location and service provisioning based on mobile phone location. A front end unit assists a cellular mobile switching center in determination of mobile phone location. Said switching center queries a database of user profiles to determine which services should be provided to the mobile phone subscriber in its current location.

Thus according to one aspect of the invention, there is provided a method for delivering content to a mobile terminal according to independent claim 1. According to another aspect of the invention, there is provided a secure content server according to independent claim 11. In addition to allowing the right holder to control the distribution of her digital content in a manner that has become customary, an audit server may integrated with the system such that access to the content may be monitored. Although content may be rendered by the terminal itself, it would be possible to deliver content to a standalone rendering machine provided the server could be assured that the machine is both authenticated and located within an area meeting the delivery condition. Advantageously, the system allows for differentiation of delivery conditions such that content may be stored centrally but access to that content via a network is controlled to meet local legislative requirements, thus the content provider is able to make content available digitally relying on local controls within secure servers on networks to which terminals have access.

Conveniently, the terminal includes a positioning system such as GPS, the output of which is trusted. Consequently, there is no need for the network operator to provide location-determining capability. Such a system may find favour in those networks where terminal positioning is already a requirement.

Advantageously, the system may be scaled to meet the requirements of different networks, thus an access point may be provided by a base station of a public land mobile network (PLMN), a Local Area Network (LAN), a Wireless Local Area Network, or even a point to point connection utilising Low Power Radio Frequency or Infrared, for example. Clearly, the delivery route for the content need not be the same as that used to request the content. Thus, a terminal may need to operate in a number of communication modes.

The server may from part of a network architecture through via which the content is delivered to the terminal, in which case the delivery conditions may be set, at least in part, by the network operator to meet with local legislative requirements regarding accessibility to content. Advantageously, such a server could form part of a private network such as an intranet, whereby content is available for rendering only within areas defined by the intranet operator. Thus, an organisation may restrict the availability of content such as text, charts, sounds, music and other data to its premises. According to another aspect of the invention there is provided a computer program comprising executable code according to independent claim 10.

Further embodiments are set out in the dependent claims.

In order to understand the present invention more fully, a number of embodiments thereof will now be described by way of example and with reference to the accompanying drawings, in which:
Figure 1 is a block diagram illustrating a personal trusted device forming part of a system according to the present invention;
Figure 2 is a schematic diagram illustrating a number of embodiments the system of Figure 1; and
Figure 3 is schematic diagram illustrating the data structure utilised in the system of Figure 1.

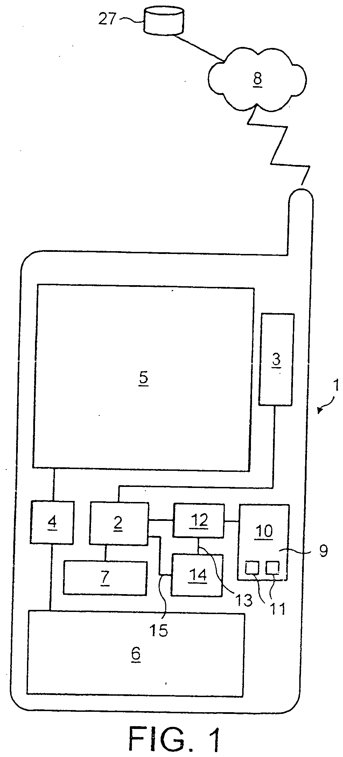

Referring to Figure 1, there is show a Personal Trusted Device (PTD) 1 which includes the functionality of a mobile terminal as is well known to those skilled in the art, Thus, the PTD 1 includes a controller 2 having connections to a transceiver 3, a user interface 4, having further connections to a display 5 and keypad 6, and a memory 7, the operation of which, in relation to a wireless network 8, are well understood by those skilled in the art.

In addition to the known functionality of a mobile terminal, the PTD 1 also includes a protected database 9 within a tamperpro of module 10. As will be described in more detail below, the database 9 facilitates the storage of digital rights information or vouchers 11. The vouchers relate to content held in secure storage. Access to the database 9 is restricted to a digital rights management engine 12, which also interfaces with the controller 2. A secure output connection 13 from the digital rights management engine 12 is provided to a rendering machine 14 having an output connection 15 to the controller 2.

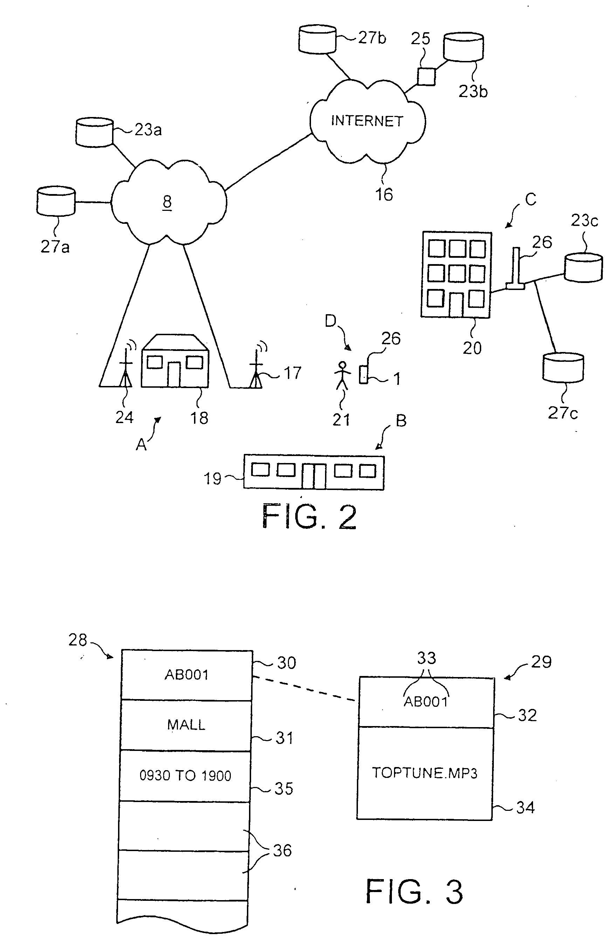

Referring to Figure 2, within the coverage area of the network 8 there are a plurality of so-called hotspots **A, B C** and **D** served by at least one base station 17. Of these hotspots **A** and **B** are co-located with a fast-food restaurant 18 and shopping mall 19 respectively, whilst **C** and **D** correspond to the location of a doctor's surgery 20 and her patient 21, respectively. The physical location of each hotspot is defined in suitable terms and may be held in an appropriate database 23 of which there may be more than one. Thus, the fast-food restaurant 18 includes a pico-cellular base station 24 providing coverage to the immediate surroundings, namely the interior of the restaurant 18. The network address of the base station 24 is held in a location database or Home Location Register (HLR) 23a forming an element of the network 8. In the case of the shopping mall 19, the geographical co-ordinates of the mall 19 are stored in a location database 23b connected to the Internet 16 and maintained by an Internet Service Provider (ISP) 25. The doctor's surgery 20 includes a Low Power Radio Frequency (LPRF) access point 26, connected to a patient database 23c forming part of a surgery management system. The patient's 21 location is determined by a PTD 1 under the controi of and in the possession of the patient 21, which PTD 1 further includes LPRF connectivity 26.

Secure content storage 27 is provided in a plurality of appropriate locations. Thus, medical records may be stored securely on a content server 27c forming part of the surgery management system. Other content may be stored within a secure content server 27a on the network 8 or even on a secure content server 27b connected directly to the Internet 16.

With reference to Figure 3, within the secure content storage 27 a record 28 exists for each content item 29. In addition to a field 30 identifying the corresponding content item 29, The record 28 includes a field 31 identifying a set of locations or a pointer to an external location database holding location information at which the content 29, to which the record relates, may be rendered. Typically, the content 29 comprises a header portion 32 including data 33 to which the identifying field 30 of the record 28 points and a payload portion 34. Optionally, the record 28 includes a further field 35 indicating at what times and/or for how long the content 29 to which it relates may be rendered. Further fields 36 containing data addressing the needs of local legislation, such as age restrictions and the like, may also be provided. In a non-illustrated embodiment, rather than provide a separate record for each item of content, metadata associated with the content itself contains the restrictions, if any, imposed on rendering thereof.

Referring particularly to Figures 1 and 3, a user downloads or otherwise obtains a voucher 11 pertaining to content 29 which she may subsequently wish to render on her PTD 1. Thus, in response to a request generated via the UI 4 of her PTD and passed by the controller 2 to the digital rights management engine 12, the engine 12 obtains a URL from the voucher 11. The URL provides an address of a secure content server 27 holding the content 29 to which the voucher 11 pertains. The controiier 2 having first established a communications channel over the network 8, passes the request to the secure content server 27 together with data indicative of whether the PTD 1 is capable of providing trusted information identifying its physical location.

The server 27 receives the request and commences a handshaking process with the engine 12 contained within the PTD 1. The engine 12 utilises the Public Key Infrastructure (PKI) including those elements held within the voucher 11, namely private keys, to authenticate the voucher 11 and hence the request. If the server is unable to authenticate the voucher 11 then the session is terminated.

Following authentication of the voucher 11, the secure content server 27 seeks to validate the conditions for delivery of the content 29 to the PTD 1 for rendering. The server 27 determines from data provided with the request whether the PTD 1 is capable of providing trusted location information. The server then accesses the record 28 corresponding to the content 29 to be rendered and determines firstly, what limitation if any is placed on a rendering location for the content 29. In the event that such a limitation exists, the server 27 field determines in what terms the limitation is defined. Thus, the limitation could be defined in relation to a network, elements of a network, geographical co-ordinates or proximity to another device, for example. Depending on the nature of the location defined in the field 31, the server 27 will adopt a different approach to determining the location of the PTD 1. Clearly, if the location is defined in terms of geographical co-ordinates, then a PTD 1 with the capability to provided trusted location information can be interrogated by the server 27 and geographical co-ordinates provided thereto. If no such facility exists or the facility is unavailable, perhaps the PTD 1 is within a building or other structure, then a network 8 based technique such as base station triangulation may be used to attempt to locate the PTD 1.

Where the location is defined by reference to the network 8 architecture with which a PTD 1 is associated, such as by proximity to a particular base station, then the server 27 will request an indication from a HLR of the network 8 of the base station through which the PTD 1 is currently accessing the network 8. In the event that the base station presently serving the PTD 1 corresponds to that defined in the record, then rendering of the corresponding content will be allowed, otherwise the session will be terminated.

In the circumstances where the location restriction is defined by an IP address of an access point, such as a LPRF access point or indeed another PTD, then at least two options exist for determining whether the PTD 1 is in proximity to the access point. In a first alternative, the server 27 contacts the access point and requests location information which it then compares with location information determined for the PTD 1. In a second alternative, the server 27 requests the PTD to authenticate itself to the access point and to provide evidence of the authentication such that content 29 may then be freely rendered.

In any event, the continued rendering of content 29 is contingent on the restrictions placed in the record file 28 being observed. Thus, the server 27 is obliged to remain satisfied that the conditions for rendering the content 29 remain met. This may not require a full authentication of the PTD 1 but rather only a check to the extent necessary as set by the record 28. Thus, the server 27 will need to repeat at predetermined intervals the process of identifying the location of the PTD 1, for example. To the extent that such information is provided by the PTD 1 itself, in the case of trusted location information, for example, then the digital rights management engine 12 will take part in the process necessary for continued rendering 29 of the content 29. Clearly, once the conditions fail to be met, rendering of the content will be terminated.

The above-described embodiment may be stiil further understood by reference to the following:
With reference to Figures 2 and hotspot A, in particular, a user of a PTD 1, receives a voucher 11 as part of a promotional exercise carried out by the owner of the fast-food restaurant 18 in conjunction with the operator of the network 8 to which the PTD belongs. The voucher 11 entitles the user to render content 29 in the form of a selection of audio tracks from a recently released album. The voucher 11 is delivered to the PTD 1 by infrared or other suitable point to point connection by the point of sale (POS) equipment (not shown) of the restaurant 18 following the purchase of a pre-determined meal. However, the content record 28 associated with the content 29 held on the secure server 27a under the control of the network 8, includes a location restriction field 31 which permits rendering only within the confines of the restaurant. The restriction is defined in terms of a pico-cell within the network 8 which contains the restaurant 18. As the promotion is for a limited period, the content record also contains a field 35 indicating the period during which rendering may take place at the specified location. In addition to the voucher 11, the user receives a separate notification to her PTD 1 of the terms of the licence.

The user is able, having purchased the meal to take a seat within the restaurant 13 and request via the UI 4, the content 29 identified in the voucher 11. Accordingly, in response to the request generated via the UI 4 of her PTD 1 and passed by the controller 2 to the digital rights management engine 12, the engine 12 obtains a URL from the voucher 11. The URL provides an address of the secure content server 27a holding the content 29 to which the voucher 11 pertains, namely the selection of audio tracks from a recently released album. The controller 2 having first established a communications channel over the network 8, passes the request to the secure content server 27a together with data indicative of whether the PTD 1 is capable of providing trusted information identifying its physical location.

The server 27a receives the request and commences a handshaking process with the engine 12 contained within the PTD 1. The engine 12 utilises the Public Key Infrastructure (PKI) including those elements held within the voucher 11, namely private keys, to authenticate the voucher 11 and hence the request. If the server 27a is unable to authenticate the voucher 11 then the session is terminated.

Following authentication of the voucher 11, the secure content server 27a seeks to validate the conditions for delivery of the content 29 to the PTD 1 for rendering. The server 27a determines from data provided with the request whether the PTD 1 is capable of providing trusted location information. The server then accesses the record 28 corresponding to the content 29 to be rendered and determines firstly, what limitation if any is placed on a rendering location for the content 29. On finding that the limitation relates to an element of the network 8 namely a base station 17, the server 27 requests an indication from an HLR 23a of the network 8 of the base station through which the PTD 1 is currently accessing the network 8. In the event that the base station 17 presently serving the PTD 1 corresponds to that defined in the record 28, then rendering of the corresponding content will be allowed, otherwise the session will be terminated.

Subject to any other restrictions on the rendering of the content 29 set out in the record 28, the digital rights management engine 12 of the PTD 1 receives the content 29 which is decrypted thereby and then rendered by the rendering machine 14. An audio output jack on the PTD (not shown) permits the connection of headphones to the device 1 such that the user can enjoy the rendered audio content 29 whilst information relating to the content 29 selected by the user may be presented on the display 5. Should the user leave the confines of the restaurant 18 and thus the scope of the licence conferred by the voucher 11, then as has been previously described the server will stop the rendering of that content.

With reference to Figures 2 and hotspot **B,** in particular, a user of a PTD 1 is pushed details of a sale event at the shopping mall 19. Included with the details is a voucher 11 which entitles the user to render content 29 in the form of various multimedia promotional presentations relating to products available from outlets within the mall 19. However, the content record 28 associated with the content 29 held on the secure server 27a includes a location restriction field 31 pointing to a location database 23b operated by the ISP 25, the database permitting rendering only within the confines of the mall 19. The restriction is defined in terms of a geographical location in the form of the co-ordinates of the mall 19. As the promotion is for a limited period, the content record 28 also contains a field 35 indicating the period during which rendering may take place. In addition to the voucher 11, the user receives a separate notification to her PTD 1 of the terms of the licence.

Having received the voucher 11, the user may choose to travel to the mail 19. On arrival at the mall 19, the user attempts to render the content via the UI 4 and thus a request is passed by the controller 2 to the digital rights management engine 12. The engine 12 obtains a URL from the voucher 11. The URL provides an address of the secure content server 27b holding the content 29 to which the voucher 11 pertains, namely various multimedia promotional presentations relating to products available from outlets within the mall 19. The controller 2 having first established a communications channel over the network 8 to the Internet 16, passes the request to the secure content server 27b together with data indicative of whether the PTD 1 is capable of providing trusted information identifying its physical location.

The server 27b receives the request and commences a handshaking process with the engine 12 contained within the PTD 1. The engine 12 utilises the Public Key Infrastructure (PKI) including those elements held within the voucher 11, namely private keys, to authenticate the voucher 11 and hence the request. If the server is unable to authenticate the voucher 11 then the session is terminated.

Following authentication of the voucher 11, the secure content server 27b seeks to validate the conditions for delivery of the content 29 to the PTD 1 for rendering. The server 27b determines from data provided with the request whether the PTD 1 is capable of providing trusted location information. The server then accesses the record 28 corresponding to the content 29 to be rendered and determines firstly, what limitation if any is placed on a rendering location for the content 29.

On finding that the limitation relates to a location defined by geographical co-ordinates, the server 27b checks whether the PTD 1 is capable of providing trusted location information. If so, a request is issued to the PTD 1 by the server 27b for its co-ordinates. The PTD 1 responds by passing the information on its present location back to the server 27b. Assuming the PTD 1 is appropriately located the server 27b releases the content for rendering by the PTD 1.

If the PTD 1 is not capable of providing trusted location information, then the server 27b must instead form and send a request to the network 8 with which the PTD 1 is associated to provide location information in respect of that PTD 1. How the network 8 determines the location of the PTD 1 in response to such a request will depend on the particular network solution adopted to positioning. Thus, the network 8 may utilise base station triangulation although other suitable techniques will be apparent to those skilled in the art. Once provided and satisfied with the location information relating to the PTD by the network 8, the server 27b is free to release the content for rendering by the PTD 1.

Subject to any other restrictions on the rendering of the content 29 set out in the record 28, the digital rights management engine 12 of the PTD 1 receives the content 29 which is decrypted thereby and then rendered by the rendering machine 14. An audio output jack on the PTD (not shown) permits the connection of headphones to the device such that the user can enjoy the rendered audio content of the presentation whilst video content is presented on the display 5. Should the user leave the confines of the mall and thus the scope of the licence conferred by the voucher 11, then as has been previously described the server 27b will stop the rendering of that content 29.

With reference to Figures 2 and hotspots **C** and **D,** in particular, a doctor may wish to view confidential medical records relating to a patient under her care. The records are located on a secure content server 27c housed within the surgery 20. A storage device 23c holds details relating to the patient location and more particularly, public keys with which an authenticated session may be established with the patients PTD 1.

In accordance with local legislation, the doctor is permitted access to the medical records of her patient within only the confines of her surgery 20 or in the presence of her patient 21. In order to comply with this requirement a record 28 associated with the content 29, namely the medical records of her patient 21, indicates that the content 29 may be rendered in the surgery 20 or in the close proximity **D** to her patient 21. This indication is defined in the first instance by reference to the LPRF access point 26 within the surgery 20 and in the second instance by having the doctor's PTD 1 authenticate itself to the patients PTD 1 by virtue of a short range point to point communication channel, such as LPRF or the like.

The doctor's PTD 1 is pre-loaded with vouchers 11 relating to those patients under her care. In those circumstances where the doctor is present within the surgery 20 and having selected via the UI 4 a particular patient 21 whose records she wish to view, the request is passed by the controller 2 to the digital rights management engine 12. The engine 12 obtains a URL from the voucher 11. The URL provides an address of the secure content server 27a holding the content 29 to which the voucher 11 pertains, namely the medical records of the patient 21. The controller 2 having first established a communications channel over the network 8, passes the request to the secure content server 27c, together with data indicative of whether the PTD 1 is capable of providing trusted information identifying its physical location, in this case its proximity to a patient.

The server 27c receives the request and commences a handshaking process with the engine 12 contained within the PTD 1. The engine 12 utilises the Public Key Infrastructure (PKI) including those elements held within the voucher 11, namely private keys, to authenticate the voucher 11 and hence the request. If the server 27c is unable to authenticate the voucher 11 then the session is terminated.

Following authentication of the voucher 11, the secure content server 27c seeks to validate the conditions for delivery of the content 29 to the PTD 1 for rendering. Thus, the server 27 accesses the record 28 corresponding to the content 29 to be rendered and determines firstly, what limitation if any is placed on a rendering location for the content 29, namely that the PTD 1 is located in the surgery or in proximity to the patient's PTD 1'.

In this case, the server 27c forms part of the surgery management system which includes a LPRF access point 26. Thus, the server 27c is able to query directly the LPRF access point 26 to determine whether the PTD 1 is present within the surgery 20. On finding that the doctor's PTD 1 is within the surgery 20, the content 29 is delivered for rendering to the PTD 1. To provide additional security, the content 29 may be delivered over the LPRF access point 26 rather than using the network 8. Indeed the whole process of seeking access to the content 29 by the PTD 1 may, instead of utilising the network 8, be carried out via the LPRF access point 26. Subject to any other restrictions on the rendering of the content 29 set out in the record 28, the digital rights management engine 12 of the PTD 1 receives the content 29 which is decrypted thereby and then rendered by the rendering machine 14. As before, should the doctor leave the confines of the surgery 20 and thus the scope of the licence conferred by the voucher 11, then as has been previously described, the server 27c will stop the rendering of that content 29 on the PTD 1.

In the event that the doctor is with the patient 21 outside of the surgery 20, then the request for rendered content 29 namely the medical records of the patient 21 is passed by the controller 2 to the digital rights management engine 12. The engine 12 obtains a URL from the voucher 11. The URL provides an address of the secure content server 27 holding the content 29 to which the voucher 11 pertains, namely the medical records of the patient 21. The controller 2 having first established a communications channel over the network 8, passes the request to the secure content server 27c together with data indicative of whether the PTD 1 is capable of providing trusted information identifying its physical location, in this case its proximity to a patient.

The server 27c receives the request and commences a handshaking process with the engine 12 contained within the PTD 1. The engine 12 utilises the Public Key Infrastructure (PKI) including those elements held within the voucher 11, namely private keys, to authenticate the voucher 11 and hence the request. If the server 27c is unable to authenticate the voucher 11 then the session is terminated.

Following authentication of the voucher 11, the secure content server 27c seeks to validate the conditions for delivery of the content 29 to the PTD 1 for rendering. Thus, the server 27 accesses the record 28 corresponding to the content 29 to be rendered and determines firstly, what limitation if any is placed on a rendering location for the content 29, namely that the PTD 1 is located in the surgery 20 or in proximity to the patient's PTD 1'.

As has been set out above, the server 27c forms part of the surgery management system which includes the LPRF access point 26. Thus, the server 27c is able to query directly the LPRF access point 26 to determine whether the PTD 1 is present within the surgery 20. On finding that the doctor's PTD 1 is not within the surgery 20, the server 27c issues a request over the network 8 to the doctor's PTD 1 to authenticate itself to the patients PTD 1'. On receiving the request, the digital rights management engine 12 initiates a suitable authentication process over a LPRF connection (not shown) to the patient's PTD 1'. Successful completion of the process results in an appropriate response being made to the server 27c. Clearly, the response to the server 27c should include elements of the PKI which will assure the server 27c that the doctor's PTD 1 is properly authenticated and therefore in proximity to the patients device 1'. Subsequently, and subject to any other restrictions on the rendering of the content 29 set out in the record 28, the content 29 is delivered over the network 8 to the doctor's PTD 1 for rendering thereby. The digital rights management engine 12 of the PTD 1 receives the content 29 which is decrypted thereby and then rendered by the rendering machine 14 for presentation by a suitable element such as the displays. Should the doctor leave the proximity of the patient's PTD 1' and thus the scope of the licence conferred by the voucher 11, then as has been previously described, the updates of the location of the PTD 1 demanded by the server 27c will reveal this event and the server 27c will terminate the rendering of that content.

It will be readily apparent from the above that many of the processes involved in rendering content on the PTD 1 depend on the provision of confidential or personal information particularly relating to location finding. Thus, various forms of encryption may put in place to protect both information and channels of communication over which such information is transferred.

## Claims

1. A method for delivering content to a mobile terminal (1), comprising:
storing content at a server (27) for delivery to at least one mobile terminal, wherein the content is associated with a record comprising at least one rendering location for the content;
receiving a request, from the mobile terminal, for the content at the server;
receiving location information for the mobile terminal at the server;
comparing the location information for the mobile terminal with the at least one rendering location for the content;
transmitting the content from the server to the mobile terminal, if the location information for the mobile terminal corresponds with a rendering location for the content;
receiving updated location information for the mobile terminal at the server;
comparing the updated location information to the at least one rendering location for the content; and
based on the comparison, preventing content rendering on the mobile terminal if the updated location information for the mobile terminal does not correspond to a rendering location for the content, and permitting rendering of the content on the mobile terminal if the updated location information for the mobile terminal corresponds to a rendering location for the content.

2. The method of claim 1, wherein the step of transmitting the content to the mobile terminal comprises transmitting the content over a wireless network.

3. The method of claim 1 or 2, wherein the content includes the location information for the content as metadata.

4. The method of claim 1, 2 or 3, wherein a rendering location for the content corresponds to one of a shopping facility and a restaurant.

5. The method of any of the preceding claims, wherein the step of transmitting the content to the mobile terminal comprises transmitting the content via a low power radio frequency, LPRF, access point.

6. The method of any of the preceding claims, wherein at least one of the steps of receiving location information for the mobile terminal and the receiving updated location information for the mobile terminal comprises receiving mobile terminal location information from an access point in proximity to the mobile terminal.

7. The method of any of the preceding claims, wherein at least one of the steps of receiving location information for the mobile terminal and the receiving updated location information for the mobile terminal comprises receiving from the mobile terminal information authenticated by an access point in proximity to the mobile terminal.

8. The method of any of the preceding claims, wherein the step of receiving the request from the mobile terminal comprises receiving the request over a wireless network.

9. The method of any of the preceding claims, further comprising the step of providing a voucher to the mobile terminal, the voucher including digital rights information and a uniform resource locator, URL, corresponding to the content on the server.

10. A computer program comprising executable code for execution when loaded on a computer, wherein the computer is operable in accordance with the code to carry out the method according to any of claims 1 to 9.

11. A secure content server (27), comprising:
means for accessing content for delivery to at least one mobile terminal (1), wherein the content is associated with a record comprising at least one rendering location for the content;
means for receiving a request, from the mobile terminal, for the content;
means for receiving location information for the mobile terminal;
means for comparing the location information for the mobile terminal with the at least one rendering location for the content;
means for transmitting the content from the server to the mobile terminal, if the location information for the mobile terminal corresponds with a rendering location for the content;
means for receiving updated location information for the mobile terminal;
comparing the updated location information for the mobile terminal to a rendering location for the content; and
based on the comparison, preventing content rendering on the mobile terminal if the updated location information for the mobile terminal does not correspond to a rendering location for the content, and permitting rendering of the content on the mobile terminal if the updated location information for the mobile terminal corresponds to a rendering location for the content.

12. The secure content server of claim 11, wherein the step of transmitting the content to the mobile terminal comprises transmitting the content over a wireless network.

13. The secure content server of claim 11 or 12, wherein the content includes the location information as metadata.

14. The secure content server of claim 11, 12 or 13, wherein a rendering location corresponds to one of a shopping facility and a restaurant.

15. The secure content server of any of claims 11 to 14, wherein the step of transmitting the content to the mobile terminal comprises transmitting the content via a low power radio frequency, LPRF, access point.

16. The secure content server of any of claims 11 to 15, wherein at least one of the receiving location information and the receiving updated location information comprises receiving mobile terminal location information from an access point in proximity to the mobile terminal.

17. The secure content server of any of claims 11 to 16, wherein at least one of the steps of receiving location information for the mobile terminal and the receiving updated location information for the mobile terminal comprises receiving from the mobile terminal information authenticated by an access point in proximity to the mobile terminal.

18. The secure content server of any of claims 11 to 17, wherein the step of receiving the request from the mobile terminal comprises receiving the request over a wireless network.

19. The secure content server of any of claims 11 to 18, the method further comprising the step of providing a voucher to the mobile terminal, the voucher including digital rights information and a uniform resource locator, URL, corresponding to the content on the server.

## Patentansprüche

1. Verfahren zur Auslieferung von Inhalten an ein mobiles Endgerät (1), umfassend:
Speichern von Inhalten auf einem Server (27) zur Auslieferung an mindestens ein mobiles Endgerät, wobei die Inhalte mit einem Datensatz verbunden sind, der mindestens einen Wiedergabeort für die Inhalte umfasst;
Empfangen, von dem mobilen Endgerät, einer Anforderung für die Inhalte an dem Server;
Empfangen von Standortinformationen für das mobile Endgerät an dem Server;
Vergleichen der Standortinformationen für das mobile Endgerät mit dem mindestens einen Wiedergabeort für die Inhalte;
Übertragen der Inhalte von dem Server an das mobile Endgerät, wenn die Standortinformationen für das mobile Endgerät einem Wiedergabeort für die Inhalte entsprechen;
Empfangen von aktualisierten Standortinformationen für das mobile Endgerät an dem Server;
Vergleichen der aktualisierten Standortinformationen mit dem mindestens einen Wiedergabeort für die Inhalte; und
basierend auf dem Vergleich, Verhindern einer Inhaltswiedergabe auf dem mobilen Endgerät, wenn die aktualisierten Standortinformationen für das mobile Endgerät einem Wiedergabeort für die Inhalte nicht entsprechen, und Zulassen einer Wiedergabe der Inhalte auf dem mobilen Endgerät, wenn die aktualisierten Standortinformationen für das mobile Endgerät einem Wiedergabeort für die Inhalte entsprechen.

2. Verfahren nach Anspruch 1, wobei der Schritt des Übertragens der Inhalte an das mobile Endgerät ein Übertragen der Inhalte über ein Drahtlosnetzwerk umfasst.

3. Verfahren nach Anspruch 1 oder 2, wobei die Inhalte die Standortinformationen für die Inhalte als Metadaten umfassen.

4. Verfahren nach Anspruch 1, 2 oder 3, wobei ein Wiedergabeort für die Inhalte einem von einer Einkaufseinrichtung und einem Restaurant entspricht.

5. Verfahren nach einem der vorhergehenden Ansprüche, wobei der Schritt des Übertragens der Inhalte an das mobile Endgerät ein Übertragen der Inhalte über einen Niedrigenergie-Funkfrequenz(LPRF)-Zugangspunkt umfasst.

6. Verfahren nach einem der vorhergehenden Ansprüche, wobei mindestens einer der Schritte des Empfangens von Standortinformationen für das mobile Endgerät und des Empfangens von aktualisierten Standortinformationen für das mobile Endgerät ein Empfangen von Standortinformationen eines mobilen Endgeräts von einem Zugangspunkt in der Nähe des mobilen Endgeräts umfasst.

7. Verfahren nach einem der vorhergehenden Ansprüche, wobei mindestens einer der Schritte des Empfangens von Standortinformationen für das mobile Endgerät und des Empfangens von aktualisierten Standortinformationen für das mobile Endgerät ein Empfangen, von dem mobilen Endgerät aus, von Informationen, die durch einen Zugangspunkt in der Nähe des mobilen Endgeräts authentifiziert wurden, umfasst.

8. Verfahren nach einem der vorhergehenden Ansprüche, wobei der Schritt des Empfangens der Anforderung von dem mobilen Endgerät ein Empfangen der Anforderung über ein Drahtlosnetzwerk umfasst.

9. Verfahren nach einem der vorhergehenden Ansprüche, ferner umfassend den Schritt des Bereitstellens eines Berechtigungsscheins für das mobile Endgerät, wobei der Berechtigungsschein Digital-Rights-Informationen und einen Uniform Resource Locator (URL), der den Inhalten auf dem Server entspricht, beinhaltet.

10. Computerprogramm, das ausführbaren Code umfasst, der ausgeführt wird, wenn er auf einem Computer geladen wird, wobei der Computer in Übereinstimmung mit dem Code betreibbar ist, um das Verfahren nach einem der Ansprüche 1 bis 9 durchzuführen.

11. Sicherer Inhaltsserver (27), aufweisend:
Mittel zum Zugreifen auf Inhalte zur Auslieferung an mindestens ein mobiles Endgerät (1), wobei die Inhalte mit einem Datensatz verbunden sind, der mindestens einen Wiedergabeort für die Inhalte umfasst;
Mittel zum Empfangen, von dem mobilen Endgerät, einer Anforderung für die Inhalte;
Mittel zum Empfangen von Standortinformationen für das mobile Endgerät;
Mittel zum Vergleichen der Standortinformationen für das mobile Endgerät mit dem mindestens einen Wiedergabeort für die Inhalte;
Mittel zum Übertragen der Inhalte von dem Server an das mobile Endgerät, wenn die Standortinformationen für das mobile Endgerät einem Wiedergabeort für die Inhalte entsprechen;
Mittel zum Empfangen von aktualisierten Standortinformationen für das mobile Endgerät;
Vergleichen der aktualisierten Standortinformationen für das mobile Endgerät mit dem einem Wiedergabeort für die Inhalte; und
basierend auf dem Vergleich, Verhindern einer Inhaltswiedergabe auf dem mobilen Endgerät, wenn die aktualisierten Standortinformationen für das mobile Endgerät einem Wiedergabeort für die Inhalte nicht entsprechen, und Zulassen einer Wiedergabe der Inhalte auf dem mobilen Endgerät, wenn die aktualisierten Standortinformationen für das mobile Endgerät einem Wiedergabeort für die Inhalte entsprechen.

12. Sicherer Inhaltsserver nach Anspruch 11, wobei der Schritt des Übertragens der Inhalte an das mobile Endgerät ein Übertragen der Inhalte über ein Drahtlosnetzwerk umfasst.

13. Sicherer Inhaltsserver nach Anspruch 11 oder 12, wobei die Inhalte die Standortinformationen als Metadaten aufweisen.

14. Sicherer Inhaltsserver nach Anspruch 11, 12 oder 13, wobei ein Wiedergabeort einem von einer Einkaufseinrichtung und einem Restaurant entspricht.

15. Sicherer Inhaltsserver nach einem der Ansprüche 11 bis 14, wobei der Schritt des Übertragens der Inhalte an das mobile Endgerät ein Übertragen der Inhalte über einen Niedrigenergie-Funkfrequenz(LPRF)-Zugangspunkt umfasst.

16. Sicherer Inhaltsserver nach einem der Ansprüche 11 bis 15, wobei mindestens eines von dem Empfangen von Standortinformationen und dem Empfangen von aktualisierten Standortinformationen ein Empfangen von Standortinformationen eines mobilen Endgeräts von einem Zugangspunkt in der Nähe des mobilen Endgeräts umfasst.

17. Sicherer Inhaltsserver nach einem der Ansprüche 11 bis 16, wobei mindestens einer der Schritte des Empfangens von Standortinformationen für das mobile Endgerät und des Empfangens von aktualisierten Standortinformationen für das mobile Endgerät ein Empfangen, von dem mobilen Endgerät aus, von Informationen, die durch einen Zugangspunkt in der Nähe des mobilen Endgeräts authentifiziert wurden, umfasst.

18. Sicherer Inhaltsserver nach einem der Ansprüche 11 bis 17, wobei der Schritt des Empfangens der Anforderung von dem mobilen Endgerät ein Empfangen der Anforderung über ein Drahtlosnetzwerk umfasst.

19. Sicherer Inhaltsserver nach einem der Ansprüche 11 bis 18, das Verfahren ferner umfassend den Schritt des Bereitstellens eines Berechtigungsscheins für das mobile Endgerät, wobei der Berechtigungsschein Digital-Rights-Informationen und einen Uniform Resource Locator (URL), der den Inhalten auf dem Server entspricht, beinhaltet.

## Revendications

1. Procédé pour distribuer un contenu à un terminal mobile (1) comprenant :
le stockage d'un contenu au niveau d'un serveur (27) pour une distribution à au moins un terminal mobile, dans lequel le contenu est associé à un enregistrement comprenant au moins un emplacement de rendu pour le contenu ;
la réception d'une requête, en provenance du terminal mobile, pour le contenu au niveau du serveur ;
la réception d'informations d'emplacement pour le terminal mobile au niveau du serveur ;
la comparaison des informations d'emplacement pour le terminal mobile avec le ou les emplacements de rendu pour le contenu ;
la transmission du contenu depuis le serveur au terminal mobile si les informations d'emplacement pour le terminal mobile correspondent à un emplacement de rendu pour le contenu ;
la réception d'informations d'emplacement mises à jour pour le terminal mobile au niveau du serveur ;
la comparaison des informations d'emplacement mises à jour avec le ou les emplacements de rendu pour le contenu ; et
en se basant sur la comparaison, l'empêchement du rendu de contenu sur le terminal mobile si les informations d'emplacement mises à jour pour le terminal mobile ne correspondent pas à un emplacement de rendu pour le contenu et l'autorisation d'un rendu du contenu sur le terminal mobile si les informations d'emplacement mises à jour pour le terminal mobile correspondent à un emplacement de rendu pour le contenu.

2. Procédé selon la revendication 1, dans lequel l'étape de transmission du contenu au terminal mobile comprend la transmission du contenu sur un réseau sans fil.

3. Procédé selon la revendication 1 ou 2, dans lequel le contenu comprend les informations d'emplacement pour le contenu sous forme de métadonnées.

4. Procédé selon la revendication 1, 2 ou 3, dans lequel un emplacement de rendu pour le contenu correspond soit à une installation de vente, soit à un restaurant.

5. Procédé selon l'une quelconque des revendications précédentes, dans lequel l'étape de transmission du contenu au terminal mobile comprend la transmission du contenu par le biais d'un point d'accès radiofréquence de faible puissance, LPRF.

6. Procédé selon l'une quelconque des revendications précédentes, dans lequel au moins l'une des étapes de réception d'informations d'emplacement pour le terminal mobile et la réception d'informations d'emplacement mises à jour pour le terminal mobile comprennent la réception d'informations d'emplacement de terminal mobile en provenance d'un point d'accès à proximité du terminal mobile.

7. Procédé selon l'une quelconque des revendications précédentes, dans lequel au moins l'une des étapes de réception d'informations d'emplacement pour le terminal mobile et la réception d'informations d'emplacement mises à jour pour le terminal mobile comprennent la réception, en provenance du terminal mobile, d'informations authentifiées par un point d'accès à proximité du terminal mobile.

8. Procédé selon l'une quelconque des revendications précédentes, dans lequel l'étape de réception de la requête en provenance du terminal mobile comprend la réception de la requête sur un réseau sans fil.

9. Procédé selon l'une quelconque des revendications précédentes, comprenant en outre l'étape de fourniture d'une pièce justificative au terminal mobile, la pièce justificative comportant des informations de droits numériques et un localisateur uniforme des ressources, URL, correspondant au contenu sur le serveur.

10. Programme d'ordinateur comprenant un code exécutable pour une exécution lorsqu'il est chargé sur un ordinateur, dans lequel l'ordinateur peut être mis en fonctionnement en fonction du code pour réaliser le procédé selon l'une quelconque des revendications 1 à 9.

11. Serveur de contenu sécurisé (27) comprenant :
des moyens pour avoir accès à un contenu pour une distribution à au moins un terminal mobile (1), dans lequel le contenu est associé à un enregistrement comprenant au moins un emplacement de rendu pour le contenu ;
des moyens pour recevoir une requête, en provenance du terminal mobile, pour le contenu ;
des moyens pour recevoir des informations d'emplacement pour le terminal mobile ;
des moyens pour comparer les informations d'emplacement pour le terminal mobile avec le ou les emplacements de rendu pour le contenu ;
des moyens pour transmettre le contenu depuis le serveur au terminal mobile si les informations d'emplacement pour le terminal mobile correspondent à un emplacement de rendu pour le contenu ;
des moyens pour recevoir des informations d'emplacement mises à jour pour le terminal mobile ;
des moyens pour comparer les informations d'emplacement mises à jour pour le terminal mobile avec un emplacement de rendu pour le contenu ; et
en se basant sur la comparaison, l'empêchement du rendu de contenu sur le terminal mobile si les informations d'emplacement mises à jour pour le terminal mobile ne correspondent pas à un emplacement de rendu pour le contenu et l'autorisation d'un rendu du contenu sur le terminal mobile si les informations d'emplacement mises à jour pour le terminal mobile correspondent à un emplacement de rendu pour le contenu.

12. Serveur de contenu sécurisé selon la revendication 11, dans lequel l'étape de transmission du contenu au terminal mobile comprend la transmission du contenu sur un réseau sans fil.

13. Serveur de contenu sécurisé selon la revendication 11 ou 12, dans lequel le contenu comprend les informations d'emplacement sous forme de métadonnées.

14. Serveur de contenu sécurisé selon la revendication 11, 12 ou 13, dans lequel un emplacement de rendu correspond soit à une installation de vente, soit à un restaurant.

15. Serveur de contenu sécurisé selon l'une quelconque des revendications 11 à 14, dans lequel l'étape de transmission du contenu au terminal mobile comprend la transmission du contenu par le biais d'un point d'accès radiofréquence de faible puissance, LPRF.

16. Serveur de contenu sécurisé selon l'une quelconque des revendications 11 à 15, dans lequel la réception d'informations d'emplacement et/ou la réception d'informations d'emplacement mises à jour comprennent la réception d'informations d'emplacement de terminal mobile en provenance d'un point d'accès à proximité du terminal mobile.

17. Serveur de contenu sécurisé selon l'une quelconque des revendications 11 à 16, dans lequel au moins l'une des étapes de réception d'informations d'emplacement pour le terminal mobile et la réception d'informations d'emplacement mises à jour pour le terminal mobile comprennent la réception, en provenance du terminal mobile, d'informations authentifiées par un point d'accès à proximité du terminal mobile.

18. Serveur de contenu sécurisé selon l'une quelconque des revendications 11 à 17, dans lequel l'étape de réception de la requête en provenance du terminal mobile comprend la réception de la requête sur un réseau sans fil.

19. Serveur de contenu sécurisé selon l'une quelconque des revendications 11 à 18, le procédé comprenant en outre l'étape de fourniture d'une pièce justificative au terminal mobile, la pièce justificative comportant des informations de droits numériques et un localisateur uniforme des ressources, URL, correspondant au contenu sur le serveur.
